# EUROPEAN PATENT APPLICATION

(11) **EP 4 796 920 A1**
(43) Date of publication of application: **26.08.2026**
(21) Application number: 24826952.4
(22) Date of filing: 26.09.2024
(51) Int. Cl.: G01N 23/04

(54) **SANDWICH STRUCTURE TEST METHOD AND DEVICE**

(30) Priority: 19.10.2023 CN 202311360513
(71) Applicant: Nuctech Company Limited, Beijing 100084 (CN); Tsinghua University, Beijing 100084 (CN)
(72) Inventor: CHANG, Ming, Beijing 100084 (CN); ZHANG, Li, Beijing 100084 (CN); LI, Liang, Beijing 100084 (CN); HONG, Mingzhi, Beijing 100084 (CN); LIU, Zhe, Beijing 100084 (CN)
(74) Representative: Cabinet Beau de Loménie
(86) International application number: PCT/CN2024/121466
(87) International publication number: WO 2025/082178

(57) **Abstract**

The present disclosure provides an inspection method for an interlayer and an inspection apparatus for an interlayer. The inspection method includes: acquiring an inspection angle for inspecting the interlayer of an object to be inspected; and inspecting the interlayer according to the inspection angle.

## Description

### CROSS REFERENCE TO RELATED APPLICATION(S)

This application claims priority to Chinese Patent Application No. 202311360513.9, filed on October 19, 2023, the entire content of which is incorporated herein in its entirety by reference.

### TECHNICAL FIELD

The present disclosure relates to a field of ray inspection, and in particular to an inspection method for an interlayer and an inspection apparatus for an interlayer.

### BACKGROUND

With an increasing application of a multi-layer composite material and an adhesive structure in industry, a demand for non-destructive inspection of such a structure is also increasing. However, an interlayer often has a thin thickness and a wide width, which puts forward higher requirements for inspection accuracy, scanning methods, etc.

In related art, an inspected interlayer is generally disposed between two layers of metal material. Rays may have a large attenuation due to a high density of the metal material. During inspection, an inspection result is subject to an interference, resulting in a poor imaging quality and requiring multiple inspections, which may have a great impact on an inspection accuracy and an inspection efficiency of the non-destructive inspection.

### SUMMARY

In a first aspect, there is provided an inspection method for an interlayer, including:
acquiring an inspection angle for inspecting the interlayer of an object to be inspected; and
inspecting the interlayer according to the inspection angle.

Further, the acquiring an inspection angle for inspecting the interlayer of an object to be inspected includes:
acquiring an image of the interlayer of the object to be inspected; and determining the inspection angle for inspecting the interlayer through the image of the interlayer of the object to be inspected.

Further, the acquiring an inspection angle for inspecting the interlayer of an object to be inspected includes:
acquiring a specific position of the interlayer in the object to be inspected; and
determining the inspection angle for inspecting the interlayer according to the specific position of the interlayer in the object to be inspected.

Further, the acquiring an image of the interlayer of the object to be inspected and determining the inspection angle for inspecting the interlayer through the image of the interlayer of the object to be inspected include:
acquiring a plurality of images of a side surface of the object to be inspected;
determining a specific position of the interlayer in the object to be inspected according to the plurality of images; and
determining the inspection angle for inspecting the interlayer according to the specific position of the interlayer in the object to be inspected.

Further, the inspecting the interlayer according to the inspection angle for inspecting the interlayer includes:
driving the object to be inspected to move in a first direction;
acquiring a position of the interlayer moving in the first direction; and
performing a tomography scanning on the interlayer according to the position of the interlayer moving in the first direction.

Further, the acquiring the position of the interlayer moving in the first direction includes:
determining a position coded value of the interlayer according to a position of the object to be inspected moving in the first direction; and
performing the tomography scanning on the interlayer according to the position coded value of the interlayer.

Further, the inspecting the interlayer according to a position of the interlayer includes:
driving an inspection unit to move in a first direction;
determining a position coded value of the inspection unit according to a position of the inspection unit moving in the first direction; and
performing a tomography scanning on the interlayer according to the position coded value of the inspection unit.

Further, the inspecting the interlayer according to a position of the interlayer includes:
driving an inspection unit to swing in a first direction;
determining a position coded value of the inspection unit according to a position of the inspection unit swinging in the first direction; and
performing a tomography scanning on the interlayer according to the position coded value of the inspection unit.

In a second aspect, there is provided an inspection apparatus for an interlayer, including:
an image acquisition unit configured to acquire an inspection angle for inspecting the interlayer of an object to be inspected; and
an inspection unit configured to inspect the interlayer according to the inspection angle.

Further, the acquiring an inspection angle for inspecting the interlayer of an object to be inspected includes:
an angle determination unit configured to determine the inspection angle for inspecting the interlayer through an image of the interlayer of the object to be inspected.

Further, the acquiring an image of the interlayer of the object to be inspected and determining the inspection angle for inspecting the interlayer through the image of the interlayer of the object to be inspected include:
a first movement unit configured to drive the image acquisition unit to move, so as to acquire a plurality of images of a side surface of the object to be inspected;
an interlayer position determination unit configured to determine a specific position of the interlayer in the object to be inspected according to the plurality of images; and
an angle adjustment unit configured to adjust the inspection unit to the inspection angle after determining the specific position of the interlayer in the object to be inspected.

Further, the inspecting the interlayer according to a position of the interlayer includes:
a second movement unit configured to drive the object to be inspected to move in a first direction; and
a position coding unit configured to determine a position coded value of the interlayer according to a position of the object to be inspected moving in the first direction.

Further, the inspecting the interlayer according to a position of the interlayer includes:
a second movement unit configured to drive the inspection unit to move in a first direction; and
a position coding unit configured to determine a position coded value of the inspection unit according to a position of the inspection unit moving in the first direction.

Further, the inspecting the interlayer according to a position of the interlayer includes:
a second movement unit configured to drive the inspection unit to swing in a first direction; and
a position coding unit configured to determine a position coded value of the inspection unit according to a position of the inspection unit swinging in the first direction.

In a third aspect, there is provided an electronic device, including:
one or more processors; and
a memory configured to store one or more programs,
where the one or more programs, when executed by the one or more processors, cause the one or more processors to perform the inspection method for the interlayer in any one of the above-mentioned embodiments.

In a fourth aspect, there is provided a computer-readable storage medium storing a computer program, where the program, when executed by a processor, implements the inspection method for the interlayer in any one of the above-mentioned embodiments.

Additional aspects and advantages of the present disclosure will be provided in part in the following description, and in part will be apparent from the following description, or will be learned through the practice of the present disclosure.

### BRIEF DESCRIPTION OF THE DRAWINGS

The above and/or additional aspects and advantages of the present disclosure will be apparent and easily understood from the description of embodiments with reference to the following accompanying drawings, in which:
FIG. 1 shows a flowchart of an inspection method for an interlayer according to embodiments of the present disclosure.
FIG. 2 shows a flowchart of acquiring an image of the interlayer of an object to be inspected and determining a position of the interlayer in step S10.
FIG. 3 shows a flowchart of acquiring a specific position of an interlayer in step S101.
FIG. 4 shows a flowchart of inspecting an interlayer in step S20.
FIG. 5 shows another flowchart of inspecting an interlayer in step S20.
FIG. 6 shows another flowchart of inspecting an interlayer in step S20.
FIG. 7 shows another flowchart of inspecting an interlayer in step S20.
FIG. 8 shows a schematic diagram of a structure of an electronic device according to embodiments of the present disclosure.

### DETAILED DESCRIPTION OF EMBODIMENTS

Embodiments of the present disclosure will be described in detail below, and examples of the embodiments will be illustrated in the accompanying drawings. Throughout the accompanying drawings, the same or similar reference numerals indicate the same or similar elements or elements having the same or similar functions. The embodiments described below with reference to the accompanying drawings are exemplary, are only for explaining the present disclosure, and may not be understood as a limitation on the present disclosure.

In the description of the present disclosure, it should be understood that, orientations or position relationships indicated by the terms "center", "longitudinal", "transverse", "length", "width", "thickness", "up", "down", "front", "back", "left", "right", "vertical", "horizontal", "top", "bottom", "inside", "outside", "clockwise", "counterclockwise", "axial", "radial", "circumferential" are based on the orientations or position relationships shown in the accompanying drawings, which are only for the convenience of describing the present disclosure and simplifying the description, rather than indicating or implying that the apparatus or element referred to must have a specific orientation, or must be constructed and operated in a specific orientation. Therefore, the terms may not be understood as a limitation on the present disclosure. In addition, features defined using "first" and "second" may explicitly or implicitly include one or more of these features. In the description of the present disclosure, unless otherwise specified, "plurality" means two or more.

In the description of the present disclosure, it should be noted that, unless otherwise specified and limited, terms "mounted", "connected" and "connection" should be broadly understood. For example, it may be a fixed connection, a detachable connection or an integrated connection. It may be a mechanical connection or an electrical connection. It may be a direct connection, an indirect connection through an intermediate medium. It may be an internal communication between two elements. For those of ordinary skill in the art, the specific meanings of the above-mentioned terms in the present disclosure may be understood based on specific circumstances.

The present disclosure provides an inspection method for an interlayer and an inspection apparatus for an interlayer. In the inspection method, the interlayer that needs to be inspected may be located, and then the interlayer is inspected, which may avoid a ray attenuation, reduce an interference for an inspection result, and improve an imaging quality, thereby improving an inspection accuracy and an inspection efficiency.

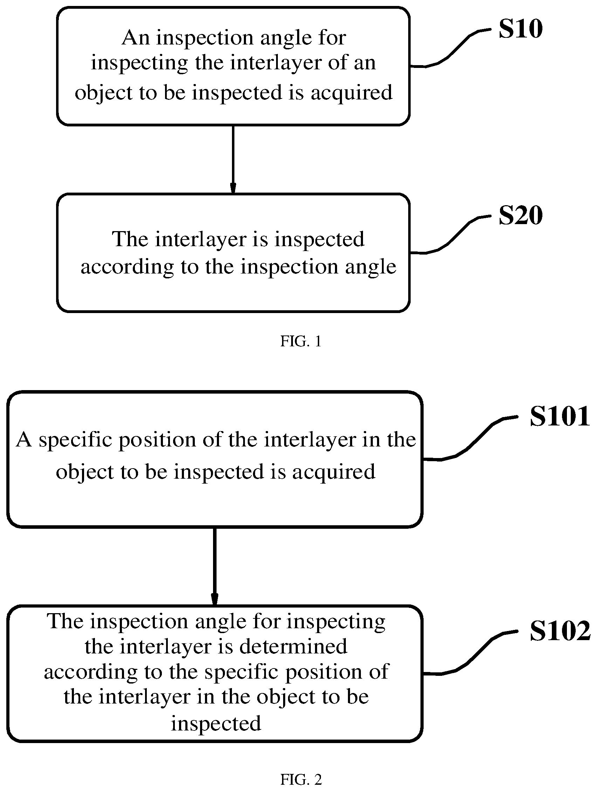

As shown in FIG. 1 to FIG. 8, there is provided an inspection method for an interlayer, including steps S10 to S20.

In step S10, an inspection angle for inspecting the interlayer of an object to be inspected is acquired.

In step S20, the interlayer is inspected according to the inspection angle.

The specific description will be provided below with reference to FIG. 1.

When the inspection angle for inspecting the interlayer of the object to be inspected is acquired, since the object to be inspected has a multi-layer composite material and the interlayer is in the object to be inspected, but the object to be inspected may be deflected during a process of placing the object to be inspected, the inspection apparatus may not directly inspect the interlayer of the object to be inspected. At this time, it is required to acquire the inspection angle for inspecting the interlayer, adjust the inspection apparatus according to the inspection angle, and then inspect the interlayer.

Further, the acquiring an inspection angle for inspecting the interlayer of an object to be inspected includes step S101.

In step S101, an image of the interlayer of the object to be inspected is acquired, and the inspection angle for inspecting the interlayer is determined through the image of the interlayer of the object to be inspected.

Specifically, the image of the interlayer of the object to be inspected may be acquired. Since the object to be inspected has a multi-layer composite material and the interlayer is in the object to be inspected, the inspection angle for inspecting the interlayer may be obtained by capturing images of a side surface of the object to be inspected. An inspection unit may be driven to move according to the inspection angle for inspecting the interlayer, so that the inspection unit may correspond to the interlayer.

After determining the inspection angle for inspecting the interlayer, the inspection unit may inspect the interlayer according to a shape of the object to be inspected.

Furthermore, during inspection by the inspection unit, it may avoid that the rays are interfered by other layers in the object to be inspected, thereby improving an imaging quality of the ray inspection, so as to improve an inspection accuracy and an inspection efficiency of the interlayer.

It may be understood that, when inspecting the interlayer, an inspection method may be determined according to a specific shape of the interlayer. For example, if a length of an inspected object is long, a length of a corresponding interlayer is also long. At this time, the inspection unit may be fixed after determining a position of the interlayer, and the interlayer may move in a straight line within an inspection range of the inspection unit by driving the object to be inspected, so that a complete inspection structure of the interlayer may be obtained, thereby improving the inspection efficiency.

It should be noted that, an application scope of the inspection method for an interlayer is not specifically limited here. For example, the method may be used for non-destructive inspection of an inner interlayer of a battery structure, and may also be used for non-destructive inspection of inner interlayers of other composite materials, which may be applied as desired in practice.

As shown in FIG. 2, further, the acquiring an inspection angle for inspecting the interlayer of an object to be inspected includes steps S101 to S102.

In step S101, a specific position of the interlayer in the object to be inspected is acquired.

In step S102, the inspection angle for inspecting the interlayer is determined according to the specific position of the interlayer in the object to be inspected.

Specifically, when the object to be inspected is produced, a thickness of each layer and a relative position between layers have been fixed. Therefore, the specific position of the interlayer in the object to be inspected may be acquired. When the object to be inspected is moved to the inspection unit, a position of the object to be inspected may be determined by a relative distance between the object to be inspected and the inspection unit during transportation. After the object to be inspected is moved to an inspection range of the inspection unit, the inspection angle for inspecting the interlayer may be determined according to a relative position relationship between a boundary of the object to be inspected and the interlayer. After determining the inspection angle for inspecting the interlayer, the inspection unit may inspect the interlayer according to a shape of the object to be inspected.

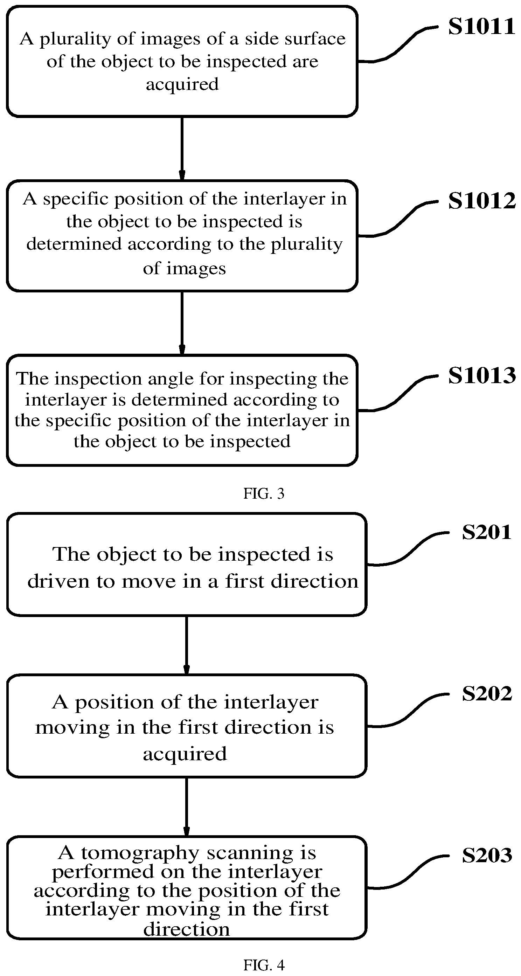

As shown in FIG. 3, further, the acquiring an image of the interlayer of the object to be inspected and determining the inspection angle for inspecting the interlayer through the image of the interlayer of the object to be inspected include steps S1011 to S1013.

In step S1011, a plurality of images of a side surface of the object to be inspected are acquired.

In step S1012, a specific position of the interlayer in the object to be inspected is determined according to the plurality of images.

In step S1013, the inspection angle for inspecting the interlayer is determined according to the specific position of the interlayer in the object to be inspected.

Specifically, when acquiring the image of the interlayer of the object to be inspected, a plurality of images from different angles may be acquired at the same time. Since different interference degrees of the images of the interlayer acquired at different angles result in different clarity, the clearest image with the least interference may be selected by comparing the plurality of images, and a corresponding position of the image may be determined as the specific position of the interlayer in the object to be inspected. Then, the inspection unit may be adjusted according to the specific position of the interlayer, so as to acquire a more accurate inspection result through the inspection unit. In order to ensure that the inspection unit has a better inspection effect, when adjusting the inspection unit, the inspection unit may be slightly moved to emit inspection rays from different angles, and the adjustment of the inspection unit may be stopped when the interference for the inspection rays is minimized.

As shown in FIG. 4, further, the inspecting the interlayer according to a position of the interlayer includes steps S201 to S203.

In step S201, the object to be inspected is driven to move in a first direction.

In step S202, a position of the interlayer moving in the first direction is acquired.

In step S203, a tomography scanning is performed on the interlayer according to the position of the interlayer moving in the first direction.

Specifically, after determining the specific position of the interlayer, the object to be inspected may be driven to move in the first direction. At this time, the inspection unit is stationary. During a movement process, the position of the interlayer in the first direction may be determined according to a transmission speed of the interlayer in the first direction, and the inspection unit may synchronously inspect the interlayer according to the movement position of the interlayer.

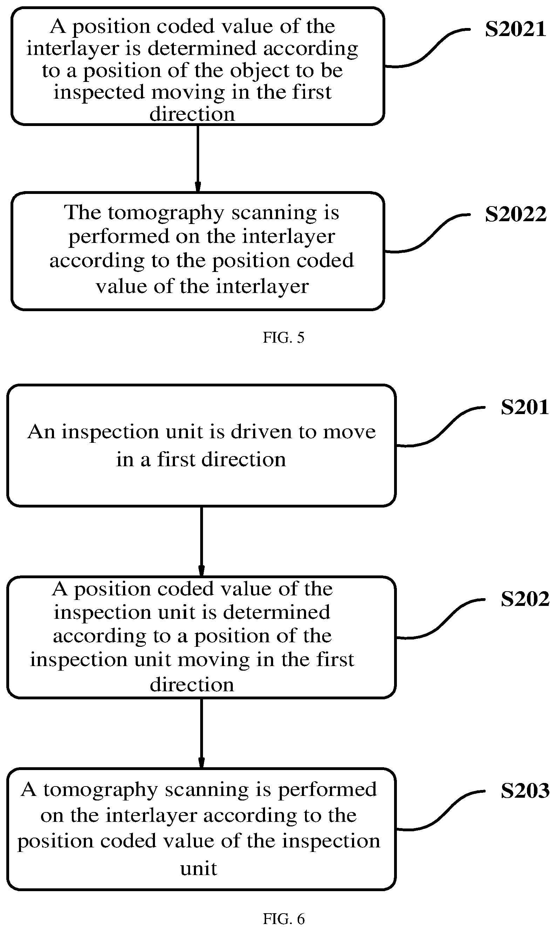

As shown in FIG. 5, further, the acquiring the position of the interlayer moving in the first direction includes steps S2021 to S2022.

In step S2021, a position coded value of the interlayer is determined according to a position of the object to be inspected moving in the first direction.

In step S2022, the tomography scanning is performed on the interlayer according to the position coded value of the interlayer.

Specifically, after determining the specific position of the interlayer, the object to be inspected may be driven to move in the first direction. At this time, the inspection unit is stationary. During a movement process, the position coded value of the interlayer, that is, movement distance information of the interlayer, may be determined according to the specific position of the interlayer, and the inspection unit may synchronously inspect the interlayer according to a movement coded value of the interlayer. Since the interlayer moves in a straight line during inspection, the inspection unit is controlled to perform a synchronous inspection according to a change in the position coded value of the interlayer, which may reduce a control requirement for a movement accuracy of the object to be inspected, thereby improving the inspection effect of the interlayer.

As shown in FIG. 6, further, the inspecting the interlayer according to a position of the interlayer includes steps S201 to S203.

In step S201, an inspection unit is driven to move in a first direction.

In step S202, a position coded value of the inspection unit is determined according to a position of the inspection unit moving in the first direction.

In step S203, a tomography scanning is performed on the interlayer according to the position coded value of the inspection unit.

Specifically, after determining the specific position of the interlayer, the inspection unit may be driven to move in the first direction. At this time, the object to be inspected is stationary. During a movement process, the position coded value of the inspection unit, that is, movement distance information of the inspection unit, may be determined according to the specific position of the inspection unit, and the inspection unit may synchronously inspect the interlayer according to its own movement coded value. Since the inspection unit moves in a straight line during inspection and the object to be inspected is in a static state, the inspection unit is controlled to perform a synchronous inspection according to a change in the position coded value of the inspection unit, which may reduce a control requirement for a movement accuracy of the inspection unit, thereby improving the inspection effect of the interlayer.

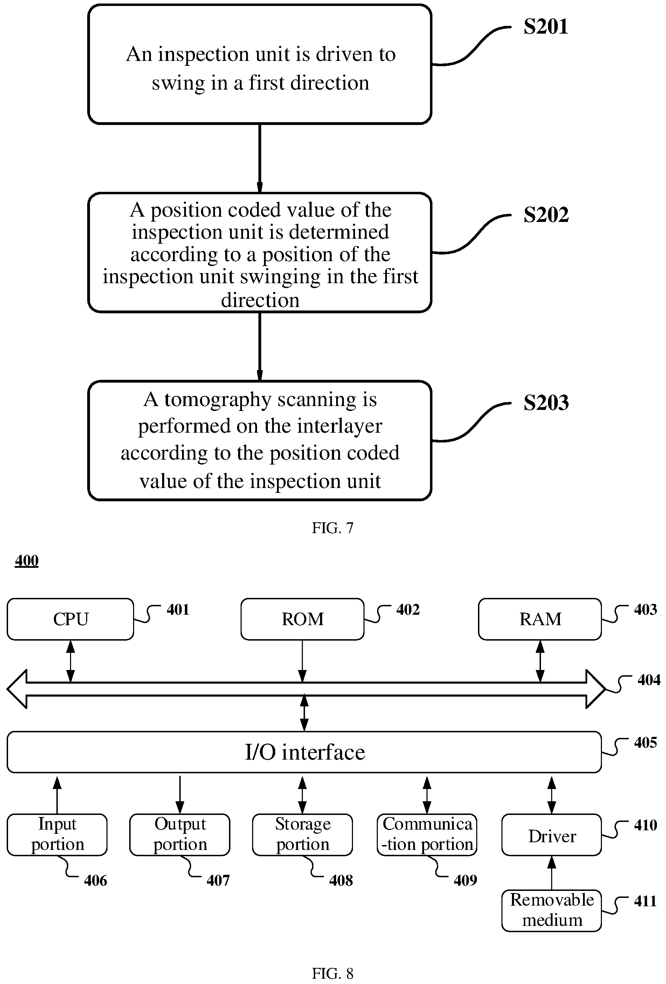

As shown in FIG. 7, further, the inspecting the interlayer according to a position of the interlayer includes steps S201 to S203.

In step S201, an inspection unit is driven to swing in a first direction.

In step S202, a position coded value of the inspection unit is determined according to a position of the inspection unit swinging in the first direction.

In step S203, a tomography scanning is performed on the interlayer according to the position coded value of the inspection unit.

Specifically, after determining the specific position of the interlayer, the inspection unit may be driven to swing in the first direction. At this time, the object to be inspected is stationary. In a swing process, the position coded value of the inspection unit, that is, swing angle information of the inspection unit, may be determined according to the specific position of the inspection unit, and the inspection unit may synchronously inspect the interlayer according to its own swing coded value. Since the inspection unit swings during inspection and the object to be inspected is in a static state, the inspection unit is controlled to perform a synchronous inspection according to a change in the position coded value of the inspection unit, which may increase the inspection angle range of the inspection unit to the interlayer, thereby improving the inspection effect of the interlayer.

In a second aspect, there is provided an inspection apparatus for an interlayer, including:
an image acquisition unit configured to acquire an inspection angle for inspecting the interlayer of an object to be inspected; and
an inspection unit configured to inspect the interlayer according to the inspection angle.

Further, the acquiring an inspection angle for inspecting the interlayer of an object to be inspected includes:
an angle determination unit configured to determine the inspection angle for inspecting the interlayer through an image of the interlayer of the object to be inspected.

Further, the acquiring an image of the interlayer of the object to be inspected and determining the inspection angle for inspecting the interlayer through the image of the interlayer of the object to be inspected include:
a first movement unit configured to drive the image acquisition unit to move, so as to acquire a plurality of images of a side surface of the object to be inspected;
an interlayer position determination unit configured to determine a position of the interlayer according to the plurality of images; and
an angle adjustment unit configured to adjust the inspection unit to the inspection angle after determining a specific position of the interlayer in the object to be inspected.

Specifically, the image acquisition unit and the inspection unit may be the same component, including a ray source and a detector. The ray source is used to emit rays to the interlayer, and the detector is used to receive the rays passing through the interlayer, so as to form an inspection image. When the image acquisition unit determines the position of the interlayer, the first movement unit may drive the ray source and/or the detector to move, so as to achieve the inspection of the ray source and the detector at a plurality of angles. The specific position of the interlayer may be determined by determining a plurality of inspection images through the interlayer position determination unit. The angle adjustment unit may fine-tune an angle of the inspection unit after determining the specific position of the interlayer, so that the rays of the inspection unit may penetrate the interlayer, so as to improve the inspection effect.

It may be understood that, a driving method of the first movement unit to the ray source and the detector may include a plurality of solutions. For example, the first movement unit may drive the ray source to move while the detector remains stationary. In a movement process of the ray source, an angle of the ray emitted by the ray source to the detector changes constantly, and different inspection results may be obtained when rays with different angles pass through the interlayer. According to the inspection results, the position of the interlayer may be determined. Similarly, the first movement unit may drive the detector to move independently, or the first movement unit may drive the ray source and the detector simultaneously.

It should be noted that, the number of ray sources is not specifically limited here, and a plurality of ray sources may be provided. By providing a plurality of ray sources to inspect the interlayer simultaneously, angles of ray inspection may be increased, thereby improving the inspection effect and the inspection efficiency of the inspection apparatus.

Further, the inspecting the interlayer according to a position of the interlayer includes:
a second movement unit configured to drive the object to be inspected to move in a first direction; and
a position coding unit configured to determine a position coded value of the interlayer according to a position of the object to be inspected moving in the first direction.

Further, the inspecting the interlayer according to a position of the interlayer includes:
a second movement unit configured to drive the inspection unit to move in a first direction; and
a position coding unit configured to determine a position coded value of the inspection unit according to a position of the inspection unit moving in the first direction.

Further, the inspecting the interlayer according to a position of the interlayer includes:
a second movement unit configured to drive the inspection unit to swing in a first direction; and
a position coding unit configured to determine a position coded value of the inspection unit according to a position of the inspection unit swinging in the first direction.

According to the technical solution provided by embodiments of the present disclosure, the specific position of the interlayer in the object to be inspected may be determined by acquiring the image of the interlayer of the object to be inspected, so as to determine the inspection angle for inspecting the interlayer. Then, the interlayer is inspected. In this way, it may avoid that the rays are interfered by other layers in the object to be inspected, so as to avoid a ray attenuation, reduce an interference for the inspection result, and improve an imaging quality, thereby improving the inspection accuracy and the inspection efficiency.

FIG. 8 shows a schematic diagram of a structure of an electronic device provided according to embodiments of the present disclosure.

As shown in FIG. 8, in another aspect, the present disclosure further provides a device 400 including one or more central processing units (CPU) 401, which may perform various appropriate actions and processes according to programs stored in a read-only memory (ROM) 402 or programs loaded into a random access memory (RAM) 403 from a storage portion 408. In the RAM 403, various programs and data required for operations of the system 400 are stored. The CPU 401, the ROM 402 and the RAM 403 are connected to each other via a bus 404. An input/output (I/O) interface 405 is also connected to the bus 404.

The following components are connected to the I/O interface 405: an input portion 406 including a keyboard, a mouse, etc.; an output portion 407 such as a cathode ray tube (CRT), a liquid crystal display (LCD), etc., and a loudspeaker, etc.; a storage portion 408 including a hard disk, etc.; and a communication portion 409 including a network interface card such as a LAN card, a modem, etc. The communication portion 409 performs communication processing via a network such as the Internet. A driver 410 is also connected to the I/O interface 405 as desired. A removable medium 411, such as a magnetic disk, an optical disk, a magneto-optical disk, a semiconductor memory, etc., is installed on the driver 410 as desired, so that computer programs read therefrom may be installed into the storage portion 408 as desired.

In particular, according to embodiments of the present disclosure, the process described above with reference to FIG. 1 may be implemented as a computer software program. For example, embodiments of the present disclosure provide a computer program product, which includes a computer program tangibly contained on a machine-readable medium, and the computer program includes a program code for performing the inspection method for an interlayer. In such embodiments, the computer program may be downloaded and installed from the network through the communication portion 409, and/or installed from the removable medium 411.

The flowcharts and block diagrams in the accompanying drawings illustrate possible architectures, functions, and operations of systems, methods, and computer program products according to various embodiments of the present disclosure. In this regard, each block in the flowchart or block diagram may represent a module, a program segment, or a portion of a code, and the module, the program segment, or the portion of the code contains one or more executable instructions for implementing a specified logical function. It should also be noted that in some alternative implementations, functions marked in the block may also occur in a different order from that marked in the accompanying drawings. For example, two consecutive blocks may actually be executed substantially in parallel, or they may sometimes be executed in a reverse order, which may depend on the functions involved. It should also be noted that, each block in the block diagram or flowchart, and a combination of the blocks in the block diagram or flowchart, may be implemented by a dedicated-purpose hardware-based system that performs a specified function or operation, or may be implemented by a combination of a dedicated-purpose hardware and computer instructions.

In yet another aspect, the present disclosure further provides a computer-readable storage medium, which may be included in the apparatus described in the above-mentioned embodiments; and the computer-readable storage medium may also exist alone without being assembled into the device. The computer-readable storage medium stores one or more programs. The one or more programs, when executed by one or more processors, perform the inspection method for an interlayer described in the present disclosure.

The flowcharts and block diagrams in the accompanying drawings illustrate possible architectures, functions, and operations of systems, methods, and computer program products according to various embodiments of the present disclosure. In this regard, each block in the flowchart or block diagram may represent a module, a program segment, or a portion of a code, and the module, the program segment, or the portion of the code contains one or more executable instructions for implementing a specified logical function. It should also be noted that in some alternative implementations, functions marked in the block may also occur in a different order from that marked in the accompanying drawings. For example, two consecutive blocks may actually be executed substantially in parallel, or they may sometimes be executed in a reverse order, which may depend on the functions involved. It should also be noted that, each block in the block diagram or flowchart, and a combination of the blocks in the block diagram or flowchart, may be implemented by a dedicated-purpose hardware-based system that performs a specified function or operation, or may be implemented by a combination of a dedicated-purpose hardware and computer instructions.

The units or modules described in embodiments of the present disclosure may be implemented by software or hardware. The described units or modules may also be provided in a processor. For example, each unit may be a software program provided in a computer or a mobile intelligent device, or a separately configured hardware apparatus. Names of these units or modules do not constitute a limitation to the units or modules themselves in some cases.

The above-mentioned descriptions are only preferred embodiments of the present disclosure and the explanation of the applied technical principles. Those of ordinary skill in the art should understand that, the scope of invention involved in the present disclosure is not limited to the technical solution formed by specific combinations of the above technical features, and should also cover other technical solutions formed by any combination of the above technical features or their equivalent features without departing from the inventive concept. For example, the technical solution formed by replacing the above features with (but not limited to) the technical features with similar functions disclosed in the present disclosure.

## Claims

1. An inspection method for an interlayer, comprising:
acquiring an inspection angle for inspecting the interlayer of an object to be inspected; and
inspecting the interlayer according to the inspection angle.

2. The inspection method for the interlayer of claim 1, wherein the acquiring an inspection angle for inspecting the interlayer of an object to be inspected comprises:
acquiring an image of the interlayer of the object to be inspected; and
determining the inspection angle for inspecting the interlayer through the image of the interlayer of the object to be inspected.

3. The inspection method for the interlayer of claim 1, wherein the acquiring an inspection angle for inspecting the interlayer of an object to be inspected comprises:
acquiring a specific position of the interlayer in the object to be inspected; and
determining the inspection angle for inspecting the interlayer according to the specific position of the interlayer in the object to be inspected.

4. The inspection method for the interlayer of claim 2, wherein the acquiring an image of the interlayer of the object to be inspected and determining the inspection angle for inspecting the interlayer through the image of the interlayer of the object to be inspected comprise:
acquiring a plurality of images of a side surface of the object to be inspected;
determining a specific position of the interlayer in the object to be inspected according to the plurality of images; and
determining the inspection angle for inspecting the interlayer according to the specific position of the interlayer in the object to be inspected.

5. The inspection method for the interlayer of claim 1, wherein the inspecting the interlayer according to the inspection angle for inspecting the interlayer comprises:
driving the object to be inspected to move in a first direction;
acquiring a position of the interlayer moving in the first direction; and
performing a tomography scanning on the interlayer according to the position of the interlayer moving in the first direction.

6. The inspection method for the interlayer of claim 5, wherein the acquiring the position of the interlayer moving in the first direction comprises:
determining a position coded value of the interlayer according to a position of the object to be inspected moving in the first direction; and
performing the tomography scanning on the interlayer according to the position coded value of the interlayer.

7. The inspection method for the interlayer of claim 1, wherein the inspecting the interlayer according to a position of the interlayer comprises:
driving an inspection unit to move in a first direction;
determining a position coded value of the inspection unit according to a position of the inspection unit moving in the first direction; and
performing a tomography scanning on the interlayer according to the position coded value of the inspection unit.

8. The inspection method for the interlayer of claim 1, wherein the inspecting the interlayer according to a position of the interlayer comprises:
driving an inspection unit to swing in a first direction;
determining a position coded value of the inspection unit according to a position of the inspection unit swinging in the first direction; and
performing a tomography scanning on the interlayer according to the position coded value of the inspection unit.

9. An inspection apparatus for an interlayer, comprising:
an image acquisition unit configured to acquire an inspection angle for inspecting the interlayer of an object to be inspected; and
an inspection unit configured to inspect the interlayer according to the inspection angle.

10. The inspection apparatus for the interlayer of claim 9, wherein the acquiring an inspection angle for inspecting the interlayer of an object to be inspected comprises:
an angle determination unit configured to determine the inspection angle for inspecting the interlayer through an image of the interlayer of the object to be inspected.

11. The inspection apparatus for the interlayer of claim 10, wherein the acquiring an image of the interlayer of the object to be inspected and determining the inspection angle for inspecting the interlayer through the image of the interlayer of the object to be inspected comprise:
a first movement unit configured to drive the image acquisition unit to move, so as to acquire a plurality of images of a side surface of the object to be inspected;
an interlayer position determination unit configured to determine a specific position of the interlayer in the object to be inspected according to the plurality of images; and
an angle adjustment unit configured to adjust the inspection unit to the inspection angle after determining the specific position of the interlayer in the object to be inspected.

12. The inspection apparatus for the interlayer of claim 9, wherein the inspecting the interlayer according to a position of the interlayer comprises:
a second movement unit configured to drive the object to be inspected to move in a first direction; and
a position coding unit configured to determine a position coded value of the interlayer according to a position of the object to be inspected moving in the first direction.

13. The inspection apparatus for the interlayer of claim 9, wherein the inspecting the interlayer according to a position of the interlayer comprises:
a second movement unit configured to drive the inspection unit to move in a first direction; and
a position coding unit configured to determine a position coded value of the inspection unit according to a position of the inspection unit moving in the first direction.

14. The inspection apparatus for the interlayer of claim 9, wherein the inspecting the interlayer according to a position of the interlayer comprises:
a second movement unit configured to drive the inspection unit to swing in a first direction; and
a position coding unit configured to determine a position coded value of the inspection unit according to a position of the inspection unit swinging in the first direction.

15. An electronic device, comprising:
one or more processors; and
a memory configured to store one or more programs,
wherein the one or more programs, when executed by the one or more processors, cause the one or more processors to perform the inspection method for the interlayer of any one of claims 1 to 8.

16. A computer-readable storage medium storing a computer program, wherein the program, when executed by a processor, implements the inspection method for the interlayer of any one of claims 1 to 8.
